# EUROPEAN PATENT APPLICATION

(11) **EP 4 617 877 A2**
(43) Date of publication of application: **17.09.2025**
(21) Application number: 25182405.8
(22) Date of filing: 12.06.2025
(51) Int. Cl.: G06F 9/50

(54) **METHOD AND APPARATUS FOR PROCESSING DATA, MEDIUM, AND DEVICE**

(30) Priority: 14.06.2024 CN 202410773327
(71) Applicant: Beijing Horizon Information Technology Co., Ltd., Beijing 100094 (CN)
(72) Inventor: SHEN, Pujun, Beijing, 100094 (CN); HONG, Yingxiang, Beijing, 100094 (CN); ZHANG, Daofu, Beijing, 100094 (CN); CHEN, Ding, Beijing, 100094 (CN)
(74) Representative: Dehns Germany Partnerschaft mbB

(57) **Abstract**

Disclosed are a method and apparatus for processing data, a medium, and a device. The method includes: determining a data computing task; generating a computation graph corresponding to the data computing task, the computation graph including one or more operators configured to perform the data computing task; determining one or more target hardware devices corresponding respectively to the one or more operators based on performance parameters and current resource usage statuses of a plurality of hardware devices; transmitting one or more computational instruction sequences, each respectively corresponding to each of the one or more operators, to the one or more target hardware devices corresponding to respective operators, such that each of the one or more target hardware devices executes the respective computational instruction sequence; and determining a processing result corresponding to the data computing task based on one or more execution results of the one or more target hardware devices.

## Description

### FIELD OF THE INVENTION

This disclosure relates to computer technology, and in particular, to a method and apparatus for processing data, a medium, and a device.

### BACKGROUND OF THE INVENTION

In a current computer system, especially a high performance computing environment, different data computing tasks generally may be executed using various different types of hardware devices. The different types of hardware devices for example may include a processor, a digital signal processing (DSP) unit, a graphics processing unit (GPU), a neural processing unit (NPU), etc. Different hardware resources generally have different characteristics such as architectures, instruction sets, programming models, etc. Therefore, a user has to perform application (app) development using runtime libraries and driver libraries corresponding respectively to different hardware devices, with problems such as great development difficulty, poor debugging convenience, etc.

### SUMMARY OF THE INVENTION

Embodiments of this disclosure provide method and apparatus for processing data, a medium, and a device, capable of implementing unified invocation of various hardware devices, lowering difficulty in developing an app by a user, improving debugging convenience thereof.

A first aspect of this disclosure provides a method for processing data, including:
determining a data computing task to be processed;
generating a computation graph corresponding to the data computing task based on the data computing task, where the computation graph includes one or more operators configured to perform the data computing task;
determining one or more target hardware devices corresponding respectively to the one or more operators based on performance parameters and current resource usage statuses of a plurality of hardware devices;
transmitting one or more computational instruction sequences, each respectively corresponding to each of the one or more operators, to the one or more target hardware devices corresponding to respective operators, such that each of the one or more target hardware devices executes the respective computational instruction sequence; and
determining a processing result corresponding to the data computing task based on one or more execution results of the one or more target hardware devices.

A second aspect of this disclosure provides an apparatus for processing data, including:
a first processing module configured to determine a data computing task to be processed;
a second processing module configured to generate a computation graph corresponding to the data computing task based on the data computing task, where the computation graph includes one or more operators configured to perform the data computing task;
a third processing module configured to determine one or more target hardware devices corresponding respectively to the one or more operators based on performance parameters and current resource usage statuses of a plurality of hardware devices;
a transmission module configured to transmit one or more computational instruction sequences, each respectively corresponding to each of the one or more operators, to the one or more target hardware devices corresponding to respective operators, such that each of the one or more target hardware devices executes the respective computational instruction sequence; and
a fourth processing module configured to determine a processing result corresponding to the data computing task based on one or more execution results of the one or more target hardware devices.

A third aspect of this disclosure provides non-transitory computer readable storage medium, on which a computer program is stored, wherein the computer program, when executed by a processor, causes the processor to implement the method for processing data according to any one of embodiments of this disclosure.

A fourth aspect of this disclosure provides an electronic device. The electronic device includes: a processor; and a memory configured to store processor-executable instructions. The processor is configured to read the executable instructions from the memory, and execute the instructions to implement the method for processing data according to any one of embodiments of this disclosure.

A fifth aspect of this disclosure provides a computer program product, where instructions in the computer program product, when executed by a processor, causes the processor to implement the method for processing data according to any one of embodiments of this disclosure.

Based on a method and apparatus for processing data, a medium, and a device according to embodiments of this disclosure, in case data are to be processed, a computation graph corresponding to a data computing task to be processed may be generated based on the data computing task, where the computation graph includes an operator configured to perform the data computing task; and then one or more target hardware devices corresponding respectively to one or more operators may be determined based on performance parameters and current resource usage statuses of a plurality of hardware devices; one or more computational instruction sequences corresponding respectively to the one or more operators may be transmitted respectively to the one or more target hardware devices corresponding respectively to the one or more operators, such that each of the one or more target hardware devices executes the respective computational instruction sequence; and a processing result corresponding to the data computing task may be determined based on one or more execution results of the one or more target hardware devices. With embodiments of this disclosure, computing capability of various hardware devices is abstracted as respective operators, such that in developing the app, the user is enabled to implement unified scheduling of the various hardware devices by invoking the respective operators. The user just has to master a manner of using the respective abstracted operators, without having to master architectures, instruction sets, programming models, etc., of different hardware devices, which thereby enables to greatly lower difficulty in developing the app by the user, and improve debugging convenience thereof.

### BRIEF DESCRIPTION OF THE DRAWINGS

FIG. 1 is a schematic diagram of an architecture of an exemplary system for processing data for a method for processing data according to this disclosure.
FIG. 2 is a flowchart of a method for processing data according to an exemplary embodiment of this disclosure.
FIG. 3 is a flowchart of a method for processing data according to another exemplary embodiment of this disclosure.
FIG. 4 is a flowchart of a method for processing data according to yet another exemplary embodiment of this disclosure.
FIG. 5 is a flowchart of a method for processing data according to still another exemplary embodiment of this disclosure.
FIG. 6 is a flowchart of a method for processing data according to yet another exemplary embodiment of this disclosure.
FIG. 7 is a flowchart of a method for processing data according to still another exemplary embodiment of this disclosure.
FIG. 8 is a diagram of a framework of processing logic of a method for processing data according to an exemplary embodiment of this disclosure.
FIG. 9 is a flowchart of a method for processing data according to an exemplary embodiment of this disclosure.
FIG. 10 is a schematic diagram of a structure of an apparatus for processing data according to an exemplary embodiment of this disclosure.
FIG. 11 is a schematic diagram of a structure of an apparatus for processing data according to another exemplary embodiment of this disclosure.
FIG. 12 is a schematic diagram of a structure of an apparatus for processing data according to yet another exemplary embodiment of this disclosure.
FIG. 13 is a schematic diagram of a structure of an apparatus for processing data according to yet another exemplary embodiment of this disclosure.
FIG. 14 is a schematic diagram of a structure of an electronic device according to embodiments of this disclosure.

### DETAILED DESCRIPTION OF THE EMBODIMENTS

To explain this disclosure, exemplary embodiments of this disclosure are described below with reference to accompanying drawings. Clearly, the embodiments described are merely some, rather than all, of embodiments of this disclosure. It should be understood that this disclosure is not limited to the exemplary embodiments.

It should be noted that, unless otherwise specified, the scope of this disclosure is not limited to relative arrangements, numeric expressions, and numerical values of components and steps described in these embodiments.

### Overview of Disclosure

In implementing this disclosure, the inventor discovers that in a current computer system, especially a high performance computing environment, different data computing tasks generally may be executed using various different types of hardware devices. The different types of hardware devices for example may include a processor, a digital signal processing (DSP) unit, a graphics processing unit (GPU), a neural processing unit (NPU), etc. Different hardware resources generally have different characteristics such as architectures, instruction sets, programming models, etc. Therefore, a user has to perform application (app) development using runtime libraries and driver libraries corresponding respectively to different hardware devices, with great development difficulty. In case of upgrading, debugging, etc., if hardware switching is needed, a developer has to make great change to an app, with a high switch cost and poor debugging convenience. Due to library across a plurality of different types of hardware devices, the performances of task scheduling, memory management and reuse are poorer. The developer has to master use ability of various resources, such as architectures, instruction sets, programming models, etc., a cost for the developer to get started is high.

### Exemplary Overview

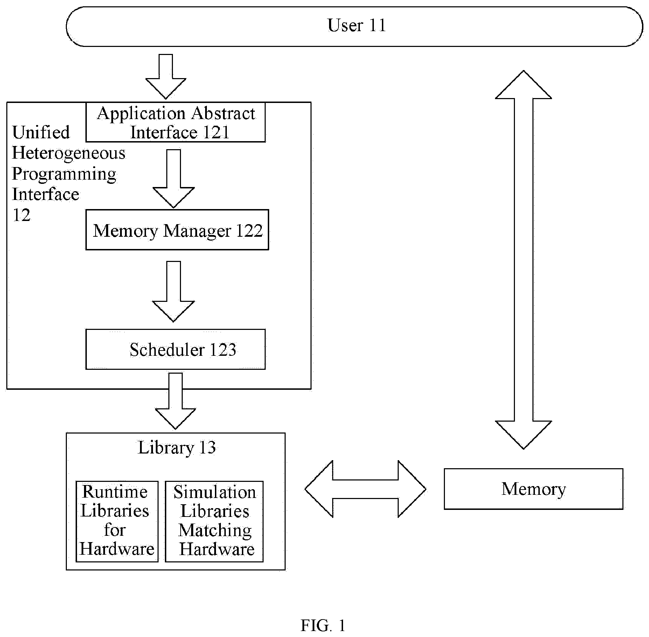

FIG. 1 is a schematic diagram of an architecture of an exemplary system for processing data for a method for processing data according to this disclosure. As shown in FIG. 1, the system for processing data may include a user 11 (which may specifically refer to a user app), a unified heterogeneous programming interface 12, a library 13, and a memory. The unified heterogeneous programming interface 12 may include an application abstracting interface 121, a memory manager 122, and a scheduler 123. The library 13 may include runtime libraries for hardware and simulation libraries simulating hardware. The memory is configured to store data, such as input data, result data, etc., in a data computation process. The application abstracting interface 121 is configured to obtain a data computing task corresponding to the user, and write, into the memory through the memory manager 122, operator information, a parameter for computation, etc., invoked by the user. The scheduler 123 may generate a computation graph based on the data computing task, and manage scheduling of the respective hardware device based on respective operators of the computation graph, to implement operations corresponding to the respective operators. The memory manager 122 is responsible for managing allocation of the memory, the user 11 also may allocate memory for respective execution results, such that the respective hardware device write the respective execution results into the specified memory, and the user 11 reads the respective execution results from the specified memory. The unified heterogeneous programming interface 12 serves as an entity that executes the method for processing data according to this disclosure. Specifically, the application abstracting interface 121 may determine a data computing task to be processed; the scheduler 123 may generate a computation graph corresponding to the data computing task based on the data computing task, where the computation graph includes one or more operators configured to perform the data computing task; then, the scheduler 123 may determine one or more target hardware devices corresponding respectively to the one or more operators based on performance parameters of a plurality of hardware devices 13 and current resource usage statuses of the plurality of hardware devices; the scheduler 123 may transmit one or more computational instruction sequences, each respectively corresponding to each of the one or more operators, to the one or more target hardware devices corresponding to respective operators, such that the respective target hardware device executes the respective one or more computational instruction sequences, to perform the computing tasks corresponding respectively to the one or more operators, to obtain execution results obtained by the respective target hardware device; and the scheduler 123 may determine a processing result corresponding to the data computing task based on the one or more execution results of the one or more target hardware devices, and return the processing result to the user 11. The user 11 may continue subsequent processing. During the processing, the memory manager 122 allocates memory for the input data, intermediate data, output data, etc., that need to be stored, and implements a data processing process by in collaboration with the scheduler 123 and the application abstracting interface 121. With embodiments of this disclosure, computing capability of various hardware devices is abstracted as respective operators, such that in developing the app, the user is enabled to implement unified scheduling of the various hardware devices by invoking the respective operators. The user just has to master a manner of using the respective abstracted operators, without having to master architectures, instruction sets, programming models, etc., of different hardware devices, which thereby enables to greatly lower difficulty in developing the app by the user, and improve debugging convenience thereof. The method according to this disclosure may be applied, but is not limited, to an application scene such as image processing, a neural network model operation, etc.

### Exemplary Method

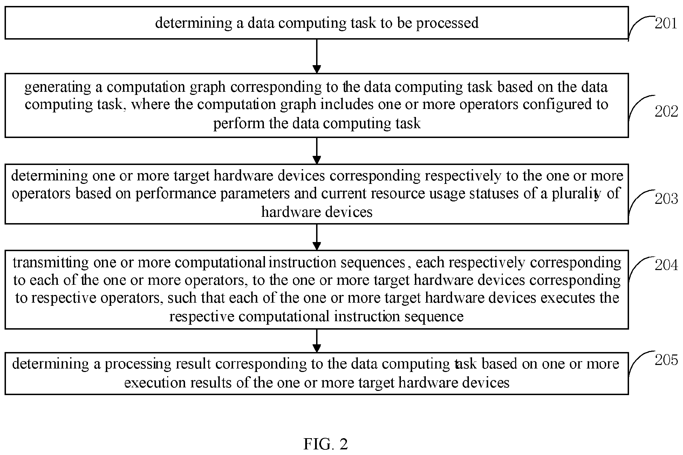

FIG. 2 is a flowchart of a method for processing data according to an exemplary embodiment of this disclosure. This embodiment may be applied to an electronic device, specifically such as an in-vehicle computing platform. As shown in FIG. 2, the method according to embodiments of this disclosure may include steps as follows.

### Step 201, Determining a data computing task to be processed

The data computing task may include related information for computation. For example, the data computing task may include the related information such as a parameter for computation, and further may include operator information corresponding to the computation. The operator information may include an operator identifier (also referred to as an operator interface). The operator identifier for example may be a name and an operator ID, etc. The parameter for computation may include an input parameter for computation, an output parameter for output after the computation, etc. The input parameter may include input data, index information of the input data, address information, etc. The index information for example may include a name of a file of the input data and a file storage address, etc. The address information may include a storage address for the input data. The output parameter may include information on a storage address for the output data, etc. After a hardware device executes a computing task and obtains an execution result, the obtained execution result is written according to a corresponding address based on the output parameter.

In some optional embodiments, the data computing task may be generated by executing the user app. The user app for example may be an image processing program, a model inference program, etc. For input data or intermediate data (such as feature data output from any network layer, such as convolution layer, pooling layer, activation layer, etc., in a process of model inference, data output at a processing stage such as edge detection, filtering, etc., in a process of image processing, etc.) for computation, the user may invoke, in the app, the respective operators through the operator identifier, to generate the data computing task. The data computing task may include the operator identifier corresponding to the computation and the parameter for computation.

In some optional embodiments, the above step 201 may be executed by the application abstracting interface 121 in FIG. 1.

### Step 202, Generating a computation graph corresponding to the data computing task based on the data computing task, where the computation graph includes one or more operators configured to perform the data computing task

An operator herein may refer to a function (also referred to as a functional code) that is abstracted for carrying out certain functional computation in advance based on performance parameters (also referred to as capability, computing capability, etc.) of multiple kinds of hardware devices. The function may include a function header and a function body. The function header may include a function type, a function name (i.e., an operator identifier), and a parameter. The function body may include a code segment that implements a specific function. The operator for example may include a vision operator, a neural network inference operator, etc. The vision operator specifically may include various image processing related operators. For example, the vision operator may include an edge detection operator, a filtering operator, an upsampling operator, a downsampling operator, etc. The neural network inference operator specifically may include a related operator in a neural network model. For example, the neural network inference operator may include a convolution operator, a pooling operator, a dequantize operator, etc. The computation graph may include one or more operators used in the data computing task, further may include an inter-operator data dependency relation. The data dependency relation represents dependency of input data of an operator on output data of another operator. For example, output data of one operator serve as input data of another operator.

In some optional embodiments, the operator may be a functional code of a high-level programming language. A function body of any one operator may include mapping relations that map the any one operator to computational instruction sequences for different hardware devices. A mapping relation between the any one operator to a computational instruction sequence for any one hardware device is configured to determine a computational instruction sequence for the any one hardware device to implement a corresponding operational function of the any one operator. A computational instruction sequence is a hardware-executable instruction sequence.

In some optional embodiments, the one or more operators used in the data computing task and the data dependency relation among the one or more operators may be determined based on the operator identifier and the parameter for computation in the data computing task, and the computation graph corresponding to the data computing task is generated based on this relation. For example, the computation graph may be expressed as: operator A→operator B→operator C. The operator A, the operator B, and the operator C may be represented by nodes of a certain shape (such as a circle, a rectangle, etc.), with an arrow thereof being an inter-node connecting side.

In some optional examples, for image processing, matrix computation, etc., each data computing task may include one operator. For example, in an image processing app, in a stage of edge detection, a data computing task for the edge detection is generated using edge detection operator identifier and a parameter for computation, and after the data computing task is obtained through the method according to embodiments of this disclosure, the generated computation graph includes the edge detection operator. Of course, for image processing, the data computing task also may include a plurality of operator identifiers which are used and related parameters for computation. For example, when demosaicing, noise reduction, white balance, etc., are performed in sequence on input data, a data computing task may be generated, the data computing task including a demosaicing operator identifier, a noise reduction operator identifier, a white balance operator identifier, and respective parameters for computation related to the operator identifiers. There is a data dependency relation among the respective parameters for computation related to the operator identifiers. For example, an output parameter corresponding to the demosaicing operator identifier being identical to an input parameter of the noise reduction operator indicates that output data of a demosaicing operator serve as input data of the noise reduction operator. Specifics may be set as needed by the user.

In some optional embodiments, for a data computing task related to model inference, etc., the parameter for computation may include index information or address information of a model file of the model, and the computation graph may be generated based on the model file of the model. The computation graph generally may include a plurality of operators and a dependency relation among the plurality of operators. The model file stores therein a functional code that implements model inference.

In some optional embodiments, step 202 may be executed by the scheduler 123 in FIG. 1.

### Step 203, Determining one or more target hardware devices corresponding respectively to the one or more operators based on performance parameters and current resource usage statuses of a plurality of hardware devices

The plurality of hardware devices may include one or more kinds of hardware devices. A performance parameter of a hardware device may include a parameter related to computing capability of the hardware device and another parameter. The parameter related to the computing capability represents the computing capability of addition, multiplication, and various kinds of image processing, model inference, and matrix operation that the hardware device is capable of carrying out. For example, the performance parameter may include a computation type, an input data format, a processing speed, a cache parameter, etc., supported by the hardware device. A current resource usage status of the hardware device represents a situation of a current load (i.e., a current resource occupation situation) of the hardware device. The current resource usage status may involve a resource currently used (occupied), and a resource not used, by the hardware device.

In some optional embodiments, the plurality of hardware devices may include a plurality of hardware devices of the same type.

In some optional embodiments, the plurality of hardware devices may include multiple types of hardware devices. There may be one or more hardware devices for each type. The multiple types of hardware devices for example may include: a central processing unit (CPU), a digital signal processing (DSP) unit, a graphics processing unit (GPU), a brain processing unit (BPU), a neural processing unit (NPU), a geometric distortion correction (GDC) unit, a STITCH (image stitching, high-speed data transportation) unit, a joint photographic experts group (JPEG) processing unit (JPU), a video processing unit (VPU), etc.

In some optional embodiments, after the computation graph of the data computing task is generated, unified task orchestration may be performed on the operators by comprehensively considering the performance parameters and the current resource usage statuses of the plurality of hardware devices, to determine the one or more target hardware devices capable of carrying out an operation of a corresponding operator. The one or more target hardware devices is configured to execute the computational instruction sequence corresponding to the corresponding operator, to implement the operation corresponding to the corresponding operator. In case of a plurality of operators, the plurality of operators may correspond to one or more target hardware devices. For example, the plurality of operators may correspond to one target hardware device. Alternatively, one part of the plurality of operators may correspond to one target hardware device, and the other part of the plurality of operators may correspond to another target hardware device. Specifics are determined according to an actual case of the operators and the hardware device.

In some optional embodiments, step 203 may be executed by the scheduler 123 in FIG. 1.

Step 204, Transmitting one or more computational instruction sequences, each respectively corresponding to each of the one or more operators, to the one or more target hardware devices corresponding to respective operators, such that each of the one or more target hardware devices executes the respective computational instruction sequence

A computational instruction sequence corresponding to any one operator is a hardware-executable code segment that carries out an operational function of the any one operator. After the one or more target hardware devices corresponding respectively to the one or more operators is determined, a computational instruction sequence corresponding to each operator may be determined based on a target hardware device corresponding to the each operator, and the computational instruction sequence corresponding to the each operator may be transmitted to the target hardware device corresponding to the each operator, such that the target hardware device executes the corresponding computational instruction sequence, to obtain an execution result.

In some optional embodiments, in case the computation graph includes a plurality of operators, there may be a data dependency relation among the plurality of operators. Then, the one or more target hardware devices may execute respective computational instruction sequences in sequence according to an order of the data dependency relation among the operators. For example, a computational instruction sequence for the operator A is executed, to obtain an execution result corresponding to the operator A. The execution result is provided, as input data of the operator B, to a target hardware device corresponding to the operator B, and the target hardware device corresponding to the operator B executes a computational instruction sequence corresponding to the operator B, and so on, until computations of the respective operators of the computation graph are carried out.

In some optional embodiments, an execution result of executing a computational instruction sequence by a hardware device may be stored in a storage space specified by the user, where a storage address may be returned to the unified heterogeneous programming interface (also referred to as an apparatus for processing data) according to embodiments of this disclosure.

In some optional embodiments, each abstracted operator may be implemented through different hardware devices. For example, mapping relations between the operator and instructions executable by different hardware devices may be configured in a function body of the operator, and the operator may be mapped in the data computation process to computational instruction sequences for the different hardware devices through the different mapping relations, such that the different hardware devices is enabled to implement an operational function of the same operator, After a target hardware device corresponding to the operator is determined, a computational instruction executable by the target hardware device may be transmitted to the target hardware device based on a mapping relation between the operator and a computational instruction sequence for the target hardware device.

In some optional embodiments, step 204 may be executed by the scheduler 123 in FIG. 1.

### Step 205, Determining a processing result corresponding to the data computing task based on one or more execution results of the one or more target hardware devices

An execution result of a target hardware device is an output result of executing a computational instruction sequence corresponding to an operator by the target hardware device.

In some optional embodiments, in case there is a data dependency relation among the one or more operators, an execution result corresponding to a terminal operator (referring to such an operator that no other operator is in dependency on output data of the operator) in the computation graph may be determined as the processing result corresponding to the data computing task. The terminal operator may include one or more operators. For example, in case of multitask output of model inference, inference results corresponding respectively to a plurality of tasks need be obtained, and then, the computation graph may include a plurality of terminating operators, to obtain the inference results of the plurality of tasks.

In some optional embodiments, in case there is no data dependency relation among the one or more operators, the one or more execution results of the one or more target hardware devices may be determined as the processing result corresponding to the data computing task. For example, in case a plurality of operators may be processed in parallel, a hardware execution results corresponding to the respective operators may be determined as the processing result corresponding to the data computing task. A specific manner of determining the processing result corresponding to the data computing task may be set as needed by the user.

In some optional embodiments, step 205 may be executed by the scheduler 123 in FIG. 1.

With the method for processing data according to this embodiment, computing capability of various hardware devices is abstracted as respective operators, such that in developing the app, the user is enabled to implement unified scheduling of the various hardware devices by invoking the respective operators. The user just has to perceive the respective operators, without having to master architectures, instruction sets, programming models, etc., of different hardware devices, which thereby enables to greatly lower difficulty and cost in developing the app by the user, and improve debugging convenience thereof, effectively improving user experience.

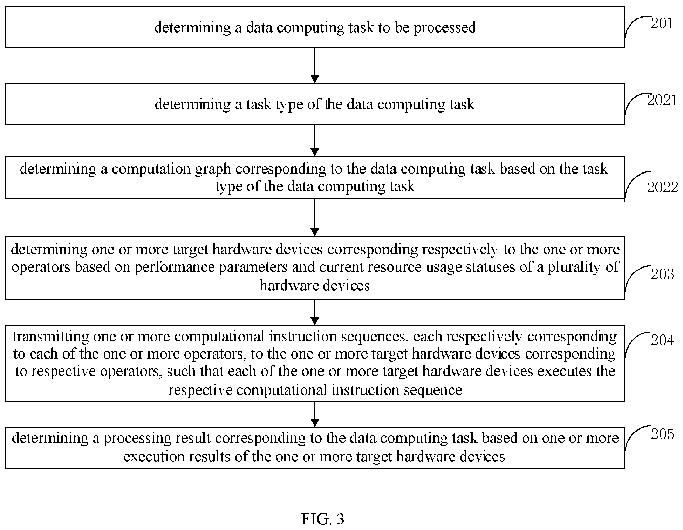

FIG. 3 is a flowchart of a method for processing data according to another exemplary embodiment of this disclosure.

In some optional embodiments, as shown in FIG. 3, based on the embodiment shown in FIG. 2, the step 202 of the generating a computation graph corresponding to the data computing task based on the data computing task may include steps as follows.

### Step 2021, Determining a task type of the data computing task

The task type of the data computing task may include a first type and a second type. The different types may correspond to different manners of generating the computation graph.

In some optional embodiments, the first type indicates that the data computing task includes an operator identifier, and an operator corresponding to the operator identifier may be determined based on the operator identifier. For example, the first type may include an image processing type and a matrix computation type. The operator corresponding to the operator identifier (such as the edge detection operator identifier) in the data computing task may be determined directly based on the operator identifier.

In some optional embodiments, for the second type, instead of including an operator identifier directly in the data computing task, related information (such as a file path, a file address, etc.) enabling to determine an operator is included in the parameter for computation. For example, the data computing task related to model inference may include a path for the model file, according to which the model file may be obtained. The model file may include an instruction sequence for the model, based on which the computation graph may be generated.

In some optional embodiments, the data computing task related to model inference may include a data computing task of pre-processing, a data computing task of model inference, and a data computing task of post-processing. Pre-processing refers to preprocessing performed on data before the data are input to the model for inference. Pre-processing may include data cleaning, data normalization, data format transformation, data size transformation, etc. A goal of pre-processing is to improve accuracy of an inference result. Post-processing refers to an operation of parsing a result of model inference to obtain human readable effective data. For example, the result of model inference is generally a group of numerical values. For example, an inference result of an image classification model is a group of probability values. By post-processing, the numerical values of the result of model inference are converted into readable results having specific meanings. For example, post-processing is performed on the group of probability values obtained by inference to obtain specific classification types. With embodiments of this disclosure, the data computing tasks of pre-processing, model inference, and post-processing are unified to obtain the data computing task related to model inference, which enables to embed pre-processing and post-processing into the model, and thereby deploy the same to a terminal through a deployment flow of pre-processing, inference, and post-processing, implementing, together by different hardware devices, efficient scheduling of pre-processing, inference, and post-processing tasks.

In some optional embodiments, a task type of the data computing task may be determined based on information in the data computing task.

In some optional embodiments, for different task types, different data computing task transmission interfaces may be provided to the user. A task type of the data computing task may be determined based on a data computing task transmission interface. For example, a data computing task of the image processing type, a data computing task of the matrix computation type, and a data computing task of a model inference type may correspond respectively to different transmission interfaces. When computation is needed, the user may transfer data computing tasks of different task types to the unified heterogeneous programming interface according to embodiments of this disclosure through different transmission interfaces, such that the unified heterogeneous programming interface is enabled to determine a task type of a data computing task directly based on a transmission interface.

### Step 2022, Determining the computation graph corresponding to the data computing task based on the task type of the data computing task

The computation graph corresponding to the data computing task is determined according to a manner of determining the computation graph corresponding to the task type. For example, for the first type, the computation graph corresponding to the data computing task may be determined based on the operator identifier in the data computing task. For the second type, the computation graph corresponding to the data computing task may be determined based on the parameter for computation in the data computing task.

With this embodiment, for data computing tasks of different task types, a computation graph corresponding to a data computing task may be determined based on a specific task type thereof, which thereby enables to implement unified scheduling of the plurality of hardware devices for data computing tasks of different task types, further improving convenience of using the hardware device by the user, improving user experience.

In some optional embodiments, the step 2022 of the determining the computation graph corresponding to the data computing task based on the task type of the data computing task may include steps as follows.

In response to the task type of the data computing task being a first type, an operator identifier and a parameter for computation are obtained from the data computing task, and a target operator corresponding to the data computing task is determined based on the operator identifier; and the computation graph corresponding to the data computing task is determined based on the parameter for computation and the target operator.

For the first type one may refer to foregoing content. The data computing task for the first type may include the operator identifier and the parameter for computation. Operator identifiers are in one-to-one correspondence with operators. Therefore, the operator identifier and the parameter for computation may be obtained from the data computing task. Then, the target operator corresponding to the data computing task may be determined based on the operator identifier, and the computation graph corresponding to the data computing task may be generated based on the parameter for computation and the target operator. The parameter for computation may include the input parameter, the output parameter, etc.

In some optional embodiments, the data computing task may include one or more operator identifiers, and one or more parameters for computation corresponding respectively to the one or more operator identifiers. A target operator corresponding to each operator identifier may be determined based on the each operator identifier. A dependency relation among the one or more target operators may be determined based on the one or more parameters for computation corresponding respectively to the one or more operator identifiers. The computation graph corresponding to the data computing task may be generated based on this relation.

With embodiments of this disclosure, the one or more target operators used in the data computing task are enabled to be determined accurately through the one or more operator identifiers in the data computing task, and in combination with the one or more parameters for computation, enable to effectively generate the computation graph corresponding to the data computing task, providing accurate effective computation graph reference for subsequent hardware scheduling.

In some optional embodiments, the step 2022 of the determining the computation graph corresponding to the data computing task based on the task type of the data computing task may include steps as follows.

In response to the task type of the data computing task being a second type, a parameter for computation is obtained from the data computing task; a model file corresponding to the data computing task is obtained based on the parameter for computation; and the computation graph corresponding to the data computing task is generated based on the model file.

For the second type one may refer to foregoing content. The data computing task of the second type may include the parameter for computation. The parameter for computation may include a path for the model file (or a storage address of the model file), a number of model files, the input data, etc. The model file may include a model functional code for computation. The parameter for computation may be obtained from the data computing task, the model file may be read according to the path for the model file in the parameter for computation, the model functional code in the model file may be read, and the computation graph corresponding to the data computing task may be generated based on the model functional code. The model functional code may be a code of a high-level programming language or an intermediate representation between a high-level programming language and a machine language. An intermediate representation may be also referred to as a computation graph. The model functional code may include information for computation corresponding respectively to one or more operators that implement model inference. The operator for model inference for example may include the convolution operator, the pooling operator, the dequantize operator, etc. Information for computation corresponding to an operator may include input parameter for computation of the operator, output parameter for output after the computation, etc.

In some optional embodiments, the computation graph may be generated based on the information for computation corresponding respectively to the one or more operators.

In some optional embodiments, the model functional code may include functional codes corresponding respectively to operators that implement pre-processing, model inference, and post-processing. A pre-processing operator for example may include a data cleaning operator, a data normalization operator, an image cropping operator, etc. The operator for model inference for example may include the convolution operator, the pooling operator, the dequantize operator, etc. A post-processing operator for example may include an inference result parsing operator, etc. The inference result parsing operator may be set based on a model function. Parsing operators of different model functions may differ.

In some optional embodiments, the computation graph corresponding to the data computing task may be generated based on a mapping relation between a model functional code and a computation graph. For example, if the model functional code is a computation graph of an intermediate representation, a computation graph in the model functional code may be determined as the computation graph corresponding to the data computing task. Alternatively, further optimization may be performed based on the computation graph in the model functional code to obtain the computation graph corresponding to the data computing task. If the model functional code is the code of the high-level programming language, the model functional code may be converted into a computation graph corresponding to that language according to a pre-configured rule for converting a high-level programming language model to a computation graph.

With this embodiment, for the data computing task of the model inference type, the model file is obtained through the parameter for computation, and the computation graph corresponding to the data computing task is determined effectively based on the model file, to enable the computation graph to accurately characterize computation to be performed for the data computing task, providing accurate effective computation graph reference for subsequent hardware scheduling and use. In addition, it is enabled to conveniently embed pre-processing and post-processing into the model, such that in executing the data computing task of the model inference type, unified arrangement and scheduling of the tasks of pre-processing, model inference, and post-processing may be implemented, thereby performing the data computing task of the model inference type through collaboration among a plurality of different hardware devices. Whereas in related art, pre-processing, model inference, and post-processing are generally separated, and in developing the app, a developer has to schedule pre-processing, model inference, and post-processing respectively. Compared to related art, embodiments of this disclosure enable to greatly improve task processing efficiency.

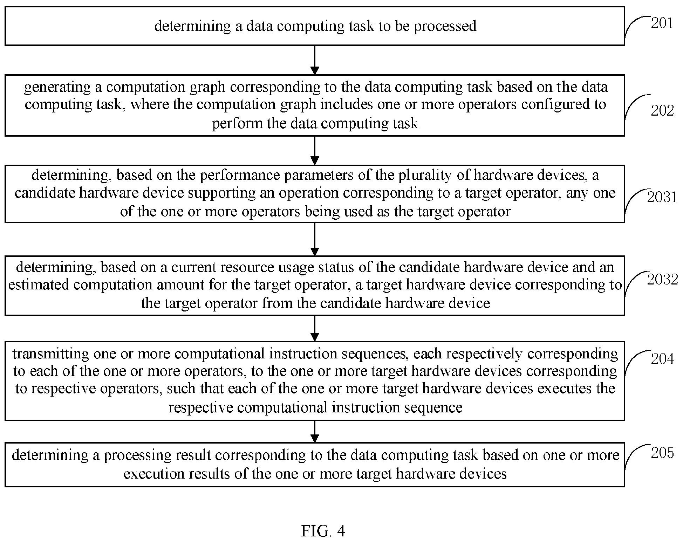

FIG. 4 is a flowchart of a method for processing data according to yet another exemplary embodiment of this disclosure.

In some optional embodiments, as shown in FIG. 4, based on the embodiment shown in FIG. 2, the step 203 of the determining one or more target hardware devices corresponding respectively to the one or more operators based on performance parameters and current resource usage statuses of a plurality of hardware devices may include steps as follows.

### Step 2031, Determining, based on the performance parameters of the plurality of hardware devices, a candidate hardware device supporting an operation corresponding to a target operator, any one of the one or more operators being used as the target operator

The performance parameters of the plurality of hardware devices may include pre-configured operator types supported respectively by the plurality of hardware devices. The candidate hardware device supporting the operation corresponding to the target operator may be determined based on a specific operator type of the target operator and the operator types supported respectively by the plurality of hardware devices. The candidate hardware device may include one or more types of hardware devices. For example, if there are multiple kinds of hardware devices each supporting the operation corresponding to the target operator, these hardware device that can support the operation corresponding to the target operator each may be determined as the candidate hardware device. Each type of candidate hardware device may include one or more candidate hardware device. For example, a DSP type of hardware device may include one or more DSP hardware device.

In some optional embodiments, an abstracted operator enables different types of hardware devices to support the operation corresponding to the same operator. For example, in addition to performing operation corresponding to an operator of the image processing type by a DSP hardware device, operations corresponding to some operators of the image processing type may be implemented by each of STITCH, GDC, JPEG, NPU, etc. In addition to performing operation corresponding to an operator of model inference type by an NPU hardware device, the operation corresponding to the operator of model inference type also may be performed by a hardware device of another type. This is because operation corresponding to an operator eventually has to be mapped to a sequence of instructions of basic operations such as multiplication, addition, subtraction, division, etc., of a hardware device. Different hardware devices implement these operations by different instructions, but each may implement the operation corresponding to the operator by laying out the instructions of the basic operations. Therefore, with the method according to embodiments of this disclosure, it is enabled to efficiently perform operations corresponding to the one or more operators through the plurality of different hardware devices.

Step 2032, Determining, based on a current resource usage status of the candidate hardware device and an estimated computation amount for the target operator, a target hardware device corresponding to the target operator from the candidate hardware device.

The current resource usage status characterizes a situation of resource occupation by the candidate hardware device. The estimated computation amount for the target operator may be determined based on a computation amount estimation manner corresponding to the target operator. Specifically, the computation amount required for the target operator may be estimated based on the specific operation corresponding to the target operator and a size of data for computation. Based on the current resource usage status of the candidate hardware device in conjunction with the estimated computation amount for the target operator, a hardware device of best performance may be determined, from the candidate hardware device, as the target hardware device, which corresponds to the target operator.

In case of a plurality of operators, task orchestration may be performed based on a data dependency relation among the plurality of operators based on the current resource usage status of the candidate hardware device in conjunction with estimated computation amounts corresponding respectively to the operators, to determine a target hardware device occupied by each operator and occupation time. In task orchestration, a target hardware device occupied by an orchestrated operator and occupation time, are marked in real time, avoiding a hardware conflict among the plurality of operators. A specific manner of task orchestration is not limited.

With this embodiment, based on the current resource usage status of the candidate hardware device supporting an operation corresponding to an operator in conjunction with an estimated computation amount for the operator, a hardware device of best performance may be selected, from the candidate hardware device, as the target hardware device corresponding to the operator, to implement effective hardware utilization, guaranteeing computing performance of the data computing task.

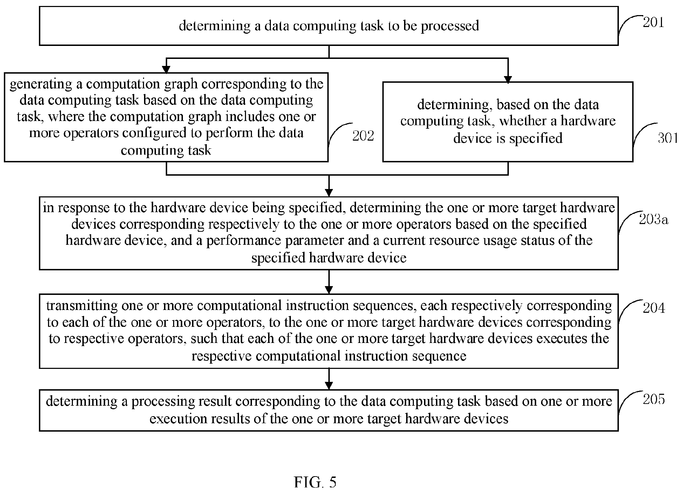

FIG. 5 is a flowchart of a method for processing data according to still another exemplary embodiment of this disclosure.

In some optional embodiments, as shown in FIG. 5, based on the embodiment shown in FIG. 2, after the step 201 of the determining a data computing task to be processed, the method according to embodiments of this disclosure further may include a step as follows.

Step 301, Determining, based on the data computing task, whether a hardware device is specified

The data computing task further may include a parameter that represents whether the user has specified a hardware device (user parameter for short), and it may be determined, based on the user parameter, whether the user has specified a hardware device. For example, different parameter values of the user parameter represent whether the user has specified a hardware device. If a parameter value is a preset value, it represents that the user does not specify any hardware device, and if the parameter value is not the preset value, but a hardware device identifier or a hardware device type of the hardware device specified by the user, it represents that the user has specified the hardware device. A specific manner of determining whether the user has specified a hardware device is not limited to the above manner, but further may be any other manner that can be implemented.

In some optional embodiments, step 301 may be executed by the scheduler 123 in FIG. 1.

The step 203 of the determining one or more target hardware devices corresponding respectively to the one or more operators based on performance parameters and current resource usage statuses of a plurality of hardware devices may include a step as follows.

Step 203a, In response to the hardware device being specified, determining the one or more target hardware devices corresponding respectively to the one or more operators based on the specified hardware device, and a performance parameter and a current resource usage status of the specified hardware device.

If the user has specified the hardware device, the performance parameter and the current resource usage status of the specified hardware device may be obtained based on the specified hardware device specified by the user, and then the one or more target hardware devices corresponding respectively to the one or more operators may be determined based on the performance parameter and the current resource usage status of the specified hardware device. For a specific operation of determining the one or more target hardware devices corresponding respectively to the one or more operators based on the performance parameter and the current resource usage status of the specified hardware device, one may refer to a foregoing embodiment, which is not repeated here.

With embodiments of this disclosure, a user-specify-hardware device function is supported, such that a user is enabled to specify a hardware device as needed, thereby meeting different users' needs for different hardware devices, further improving user experience. The user-specify-hardware device function enables a user to implement hardware switching efficiently and conveniently in development. That is, the user is enabled to implement hardware switching by simply modifying the hardware device specifying parameter. For example, operation corresponding to the one or more operators of the data computing task of the model inference type is executed generally through the NPU hardware device. In some scenes, it may be specified to execute the operation corresponding to the one or more operators using a DSP hardware device of a lower power consumption, which thereby enables to effectively lower power consumption and save energy. For example, in a sentry mode of a vehicle, respective functions of the sentry mode may be implemented through the lower power consumption. A sentry mode refers to a safety function implemented based on original hardware device such as a sensor, a camera, etc., of the vehicle, to help a vehicle owner obtain a vehicle safety case in real time when leaving the vehicle, and automatically acquire and record pictures around the vehicle, and send an alarm to a mobile phone of a driver. The vehicle owner is enabled to implement, by control through the mobile phone, a function such as vehicle honking and flashing, and remote voice, etc.

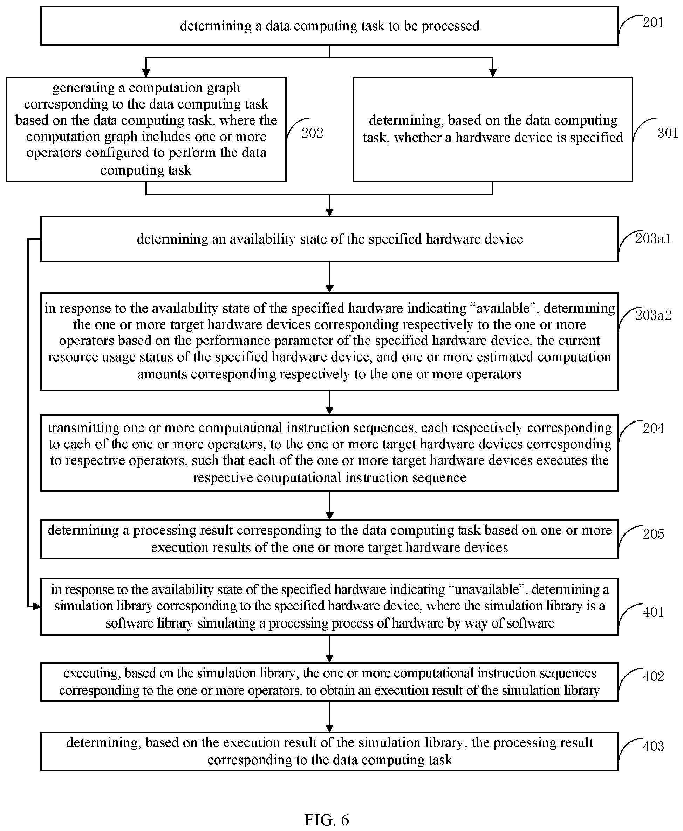

FIG. 6 is a flowchart of a method for processing data according to yet another exemplary embodiment of this disclosure.

In some optional embodiments, as shown in FIG. 6, the step 203a of the determining the one or more target hardware devices corresponding respectively to the one or more operators based on the specified hardware device, and a performance parameter and a current resource usage status of the specified hardware device may include steps as follows.

### Step 203a1, Determining an availability state of the specified hardware device

The availability state of the specified hardware device represents whether there is the specified hardware device. For example, the hardware device specified by the user is DSP, it need be determined whether there actually is DSP hardware device, where if there is the specified hardware device, the availability state of the specified hardware device may be determined as "available"; and otherwise, the availability state of the specified hardware device may be determined as "unavailable".

In some optional embodiments, the specified hardware device may include one or more hardware devices.

Step 203a2, In response to the availability state of the specified hardware indicating "available", determining the one or more target hardware devices corresponding respectively to the one or more operators based on the performance parameter of the specified hardware device, the current resource usage status of the specified hardware device, and one or more estimated computation amounts corresponding respectively to the one or more operators

If the specified hardware device is available, the one or more target hardware devices corresponding respectively to the one or more operators are determined based on the performance parameter of the specified hardware device, the current resource usage status of the specified hardware device, and one or more estimated computation amounts corresponding respectively to the one or more operators. Specifically, it is determined, based on the performance parameter of the specified hardware device, whether the specified hardware device supports operation corresponding to an operator; and it is determined, based on the current resource usage status of the specified hardware device and an estimated computation amount for the operator, whether a remaining idle resource of the specified hardware device is capable of carrying out the operation corresponding to the operator. Based on this, one or more target hardware devices corresponding respectively to the one or more operators are determined from among the hardware device specified by the user.

In some optional embodiments, if the specified hardware device includes only one hardware device, the specified hardware device is set to be the target hardware device. In this case, if the current remaining idle resource of the specified hardware device cannot meet operating requirement of the one or more operators, after awaiting till the resource of the specified hardware device is released, the specified hardware device may be determined as the target hardware device.

With embodiments of this disclosure, in case a hardware device is specified by the user, first the availability state of the specified hardware device is determined, and the one or more target hardware devices corresponding respectively to the one or more operators are determined based on the specified hardware device in case it is determined that the specified hardware device is available, avoiding a case that there is no hardware device specified by a user and cannot perform the data computing task corresponding to the user.

In some optional embodiments, as shown in FIG. 6, the method according to embodiments of this disclosure further may include steps as follows.

Step 401, In response to the availability state of the specified hardware indicating "unavailable", determining a simulation library corresponding to the specified hardware device, where the simulation library is a software library simulating a processing process of hardware by way of software

If the availability state of the specified hardware device indicates "unavailable", it represents that there is no specified hardware device. A simulation library is a pre-configured software library simulating an execution process of hardware. Through the simulation library, an execution result identical to an execution result of hardware may be implemented, and performance identical to or close to performance of hardware may be achieved. If the availability state of the specified hardware device indicates "unavailable", the specified hardware device may be replaced with the simulation library corresponding to the specified hardware device, to meet the user's specifying demand.

Step 402, Executing, based on the simulation library, the one or more computational instruction sequences corresponding respectively to the one or more operators, to obtain an execution result of the simulation library

After the simulation library corresponding to the specified hardware device is determined, the one or more computational instruction sequences corresponding respectively to the one or more operators may be executed through the simulation library, to obtain the execution result of the simulation library. The execution result of the simulation library may be identical to that of the specified hardware device.

In some optional embodiments, the execution result of the simulation library may be stored in a result storage space specified by the user.

Step 403, Determining, based on the execution result of the simulation library, the processing result corresponding to the data computing task

The processing result corresponding to the data computing task may be determined based on the execution result of the simulation library in a way similar to how the processing result corresponding to the data computing task is determined based on the one or more execution results of the one or more target hardware devices, for specifics of which one may refer to a foregoing embodiment, which is not repeated here.

In some optional embodiments, in case the specified hardware device is available, if the remaining idle resource of the specified hardware device does not meet a requirement for an computation amount for the one or more operators, the target hardware device for the operator may be replaced with the simulation library for the specified hardware device to execute the computational instruction sequence for the operator.

In some optional embodiments, step 401 to step 403 may be executed by the scheduler 123 in FIG. 1.

With embodiments of this disclosure, by providing a simulation library that simulates a hardware device, it is enabled to provide the user with an execution result identical to that of the specified hardware device even in case the hardware device specified by the user is unavailable, meeting a user requirement, improving debugging convenience thereof, and in some scenes hardware device configuration is not required, lowering hardware device cost.

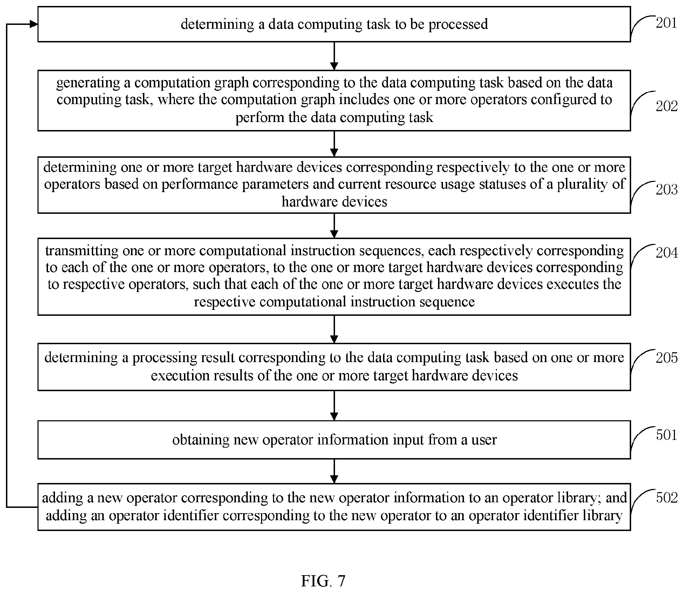

FIG. 7 is a flowchart of a method for processing data according to still another exemplary embodiment of this disclosure.

In some optional embodiments, as shown in FIG. 7, based on the embodiment shown in FIG. 2, the method according to embodiments of this disclosure further may include steps as follows.

### Step 501, Obtaining new operator information input from a user

The new operator information may include a new operator identifier, and a new operator corresponding to the new operator identifier. A function body of the new operator may include mapping relations between the new operator and computational instruction sequences for the different hardware devices.

In an actual application, the user may abstract a new operator based on hardware capability in the actual application, to facilitate subsequent use by the user. The user may input the new operator information into an apparatus according to embodiments of this disclosure, and then the apparatus may obtain the new operator information input from the user. A manner of input may be any manner. For example, the new operator information is written into a file, and the file is uploaded to the apparatus.

In some optional embodiments, step 501 may be executed by the application abstracting interface 121 in FIG. 1.

Step 502, Adding a new operator corresponding to the new operator information to an operator library; and adding an operator identifier corresponding to the new operator to an operator identifier library

After the new operator information input from the user is obtained, the new operator corresponding to the new operator information is added to the operator library, to support using of the new operator by a subsequent data computing task. The operator identifier corresponding to the new operator is added to the operator identifier library, to be exposed to the user, such that the user is enabled to use the new operator through the operator identifier.

In some optional embodiments, step 502 may be executed by the scheduler 123 in FIG. 1.

Embodiments of this disclosure enable to support expanding to a new abstracted operator by the user, which thereby enables to continuously improve a usable operator function, further improving a hardware utilization rate.

Note that step 501 to step 502 may be triggered by the user at any time point, with no restriction on an order thereof with respect to a step of a foregoing embodiment, and FIG. 7 is just an example.

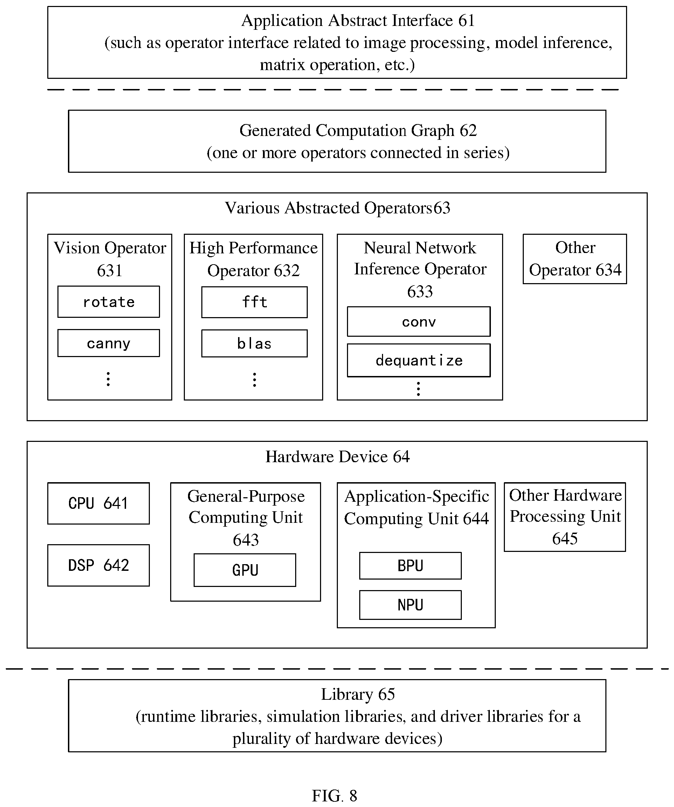

In some optional embodiments, FIG. 8 is a diagram of a framework of processing logic of a method for processing data according to an exemplary embodiment of this disclosure. As shown in FIG. 8, the framework includes an application abstracting interface 61 at an upper layer, a generated computation graph 62, various abstracted operators 63, hardware device 64, and a library 65 at a bottom layer. The entity that executes the method according to embodiments of this disclosure, i.e., the unified heterogeneous programming interface, includes the application abstracting interface 61, the generated computation graph 62, and the various abstracted operators 63. The application abstracting interface 61 at the upper layer is an operator interface exposed to the user. The operator interface for example may include interfaces for operators related to various operations such as image processing, model inference, matrix operation, etc. The operator interface may include an operator name, an operator identifier, etc. The user may implement unified scheduling of multiple kinds of hardware devices using the application abstracting interface through the framework according to embodiments of this disclosure. The generated computation graph 62 is configured to generate the computation graph for the user's data computing task to be processed to connect the one or more operators in series. Specifically, the computation graph may be generated based on the operator interfaces used by the user and a data dependency relation among the operator interfaces. The various abstracted operators 63 are functional code segments configured to perform respective operator operation tasks, and the operators are mapped to the computational instruction sequences for the different hardware devices through the functional code segments, such that the different hardware devices are enabled to carry out the operation corresponding to the same operator. The operation tasks corresponding to the operators are performed by executing the computational instruction sequences corresponding respectively to the operators by the hardware device. The various abstracted operators 63 may include a vision operator 631, a high performance operator 632, a neural network inference operator 633, and an other operator 634. Each operator may be subdivided to include a specific operator. For example, the vision operator 631 may include a rotate operator, a canny (edge detection) operator, various filtering operators, an upsampling operator, a downsampling operator, an affine transformation operator, a perspective transformation operator, a corner detection operator, a histogram equalization operator, a color space conversion operator, an erosion operator, etc. The high performance operator 632 may include a fast Fourier transform (fft) operator, a basic linear algebra subprograms (blas) operator, etc. The neural network inference operator 633 may include a convolution (conv) operator, a pooling operator, a dequantize operator, etc. The other operator 634 may include an operator other than the foregoing operators. The hardware device 64 may include a central processing unit (CPU) 641, a digital signal processing (DSP) unit 642, a general-purpose computing unit 643, an application-specific computing unit 644, and an other hardware processing unit 645. The general-purpose computing unit 643 for example may include a graphics processing unit (GPU). The application-specific computing unit 644 for example may include a brain processing unit (BPU, an intelligent processing unit), a neural processing unit (NPU), etc. The other hardware processing unit 645 may include a processing unit other than the foregoing hardware units, such as a geometric distortion correction (GDC) unit, a STITCH (image stitching, high-speed data transportation) unit, a JPEG processing unit (JPU), a video processing unit (VPU), etc. The library 65 at the bottom layer may include runtime libraries, simulation libraries, and driver libraries for the plurality of hardware devices, configured to drive the hardware device to execute respective instructions, or configured to simulate execution of the respective instructions by the hardware device. A runtime library includes hardware device and software, and correct operation corresponding to an operator is implemented through both the hardware and the software. A simulation library is a software library simulating a processing process of hardware. A driver library is a driver software library driving hardware to run. As dependencies on the bottom layer, these runtime libraries, simulation libraries, and driver libraries are configured for correct execution of an abstracted operator.

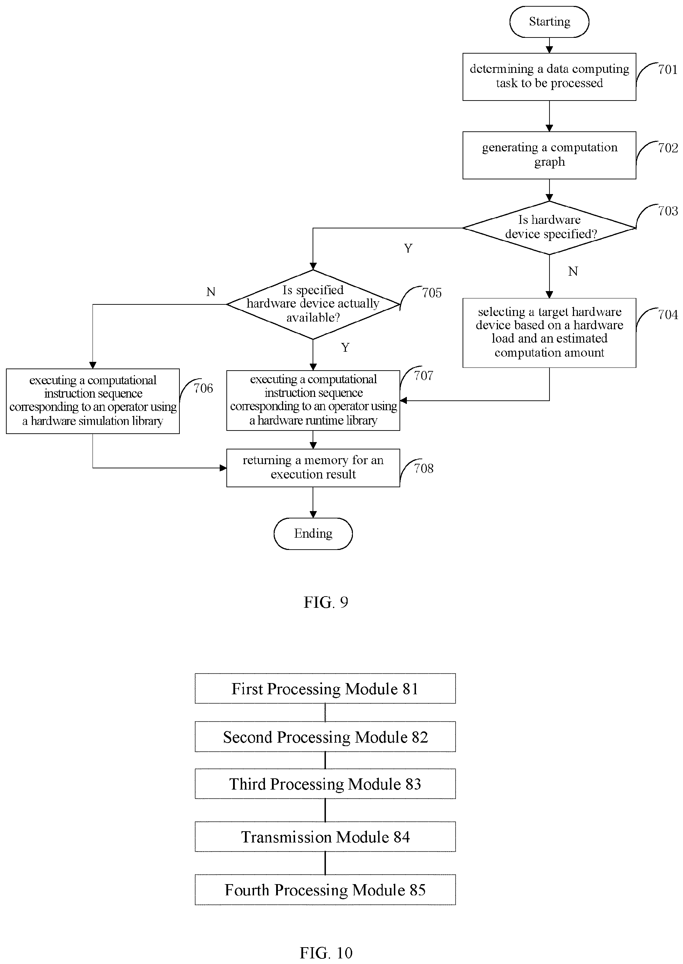

In some optional embodiments, FIG. 9 is a flowchart of a method for processing data according to an exemplary embodiment of this disclosure. As shown in FIG. 9, the flow of the method may include steps as follows.

Step 701, Determining a data computing task to be processed. Specifically, in invoking the application abstracting interface by executing the app, the data computing task to be processed is generated, triggering start of the flow of the method for processing data according to embodiments of this disclosure. With the method according to embodiments of this disclosure, the data computing task to be processed may be determined based on a data computing task transferred by the application abstracting interface invoked by the app.

Step 702, Generating a computation graph based on the data computing task to be processed. The computation graph includes one or more operators connected in series.

Step 703, Determining whether a hardware device is specified, where if not, proceeding to step 704, and if yes, proceeding to step 705.

Step 704, Selecting a target hardware device based on a hardware load and an estimated computation amount. The hardware load is a current resource usage status of a hardware device, and the estimated computation amount is an estimated computation amount for an operation corresponding to an operator. Specifically, a target hardware device supporting the operation corresponding to the operator is determined based on a performance parameter of the hardware device, the current resource usage status of the hardware device, and the estimated computation amount for the operator.

Step 705, Determining whether the specified hardware device is actually available, that is, determining an availability state of the specified hardware device, where if not, proceeding to step 706, and if yes, proceeding to step 707.

Step 706, Executing a computational instruction sequence corresponding to an operator using a hardware simulation library. Proceeding to step 708.

Step 707, Executing a computational instruction sequence corresponding to an operator using a hardware runtime library. Proceeding to step 708.

Step 708, Returning a memory for an execution result. That is, a memory address for storing of the execution result is returned.

In related art, in developing an app, if a plurality of hardware devices are involved, a user often has to implement the development using libraries corresponding respectively to the plurality of hardware devices. In upgrading and debugging, if hardware switching is needed, it may increase an amount of change to the app, with a high hardware switching cost, and styles of different hardware devices differ, with great development difficulty. Development with hardware has to be run on particular hardware device, with poor debugging convenience. Development across a plurality of libraries cannot be optimized in terms of task scheduling, as well as memory management and reuse, leading to poor performance. In addition, the developer has to learn to use multiple kinds of hardware devices, with high learning and time costs. In addition, a strong binding with hardware puts a high requirement on a development environment. In view of these problems, with the method according to embodiments of this disclosure, a heterogeneous unified application programming interface is implemented by abstracting hardware capability of the plurality of hardware devices into an actual application abstracting interface, leading to a more friendly function of accessing and controlling different hardware resources. Secondly, in development, the cost of hardware switching by the user may be lowered, and the user may implement hardware switching by simple parameter setting, improving efficiency. Again, often there are a plurality of libraries corresponding to the plurality of hardware devices, and styles of different libraries differ. By abstracting the styles into a unified operator, and exposing the unified operator to the user, a unified heterogeneous programming interface is implemented, which enables to weaken perception of a hardware-level environment by the user, such that the user is enabled to implement hardware usage using one set of programming languages (such as any high-level programming language), effectively lowering a research and development cost, the learning cost, and a cost of managing multiple kinds of libraries, improving work efficiency. In addition, unified task scheduling and memory management may be performed on the multiple kinds of hardware devices, which enables to make full use of hardware performance to improve a hardware utilization rate, as well as to implement pipeline work by the plurality of hardware devices, avoiding invalid overhead, which helps reduce internal data copies, and facilitates unified management of hardware runtime states. In addition, better source code level optimization may be performed on the hardware device through the unified heterogeneous programming interface, to implement high-performance scheduling arrangement, and perform a computing task through optimal hardware execution, to make full use of the hardware performance. Finally, with embodiments of this disclosure, it is enabled to weaken the development environment that is bound strongly with hardware, and capability similar to or completely matching hardware execution capability is provided by providing a simulation library, further improving research and development efficiency, lowering the development difficulty.

Respective embodiments of this disclosure may be implemented individually or as any combination as long as it causes no conflict, specifics of which may be set as needed, and are not limited in this disclosure.

Any one method for processing data according to embodiments of this disclosure may be implemented by any appropriate device capable of data processing, including but not limited to a terminal device, a server, etc. Alternatively, the any one method for processing data according to embodiments of this disclosure may be implemented by a processor. For example, the processor implements the any one method for processing data mentioned in embodiments of this disclosure by calling respective instructions stored in a memory, which is not described hereinafter.

### Exemplary Apparatus

FIG. 10 is a schematic diagram of a structure of an apparatus for processing data according to an exemplary embodiment of this disclosure. The apparatus based on the embodiment may be configured to implement the respective method embodiments of this disclosure. The apparatus as shown in FIG. 10 includes: a first processing module 81, a second processing module 82, a third processing module 83, a transmission module 84, and a fourth processing module 85.

The first processing module 81 is configured to determine a data computing task to be processed.

The second processing module 82 is configured to generate a computation graph corresponding to the data computing task based on the data computing task, where the computation graph includes one or more operators configured to perform the data computing task.

The third processing module 83 is configured to determine one or more target hardware devices corresponding respectively to the one or more operators based on performance parameters and current resource usage statuses of a plurality of hardware devices.

The transmission module 84 is configured to transmit one or more computational instruction sequences, each respectively corresponding to each of the one or more operators, to the one or more target hardware devices corresponding to respective operators, such that each of the one or more target hardware devices executes the respective computational instruction sequence.

The fourth processing module 85 is configured to determine a processing result corresponding to the data computing task based on one or more execution results of the one or more target hardware devices.

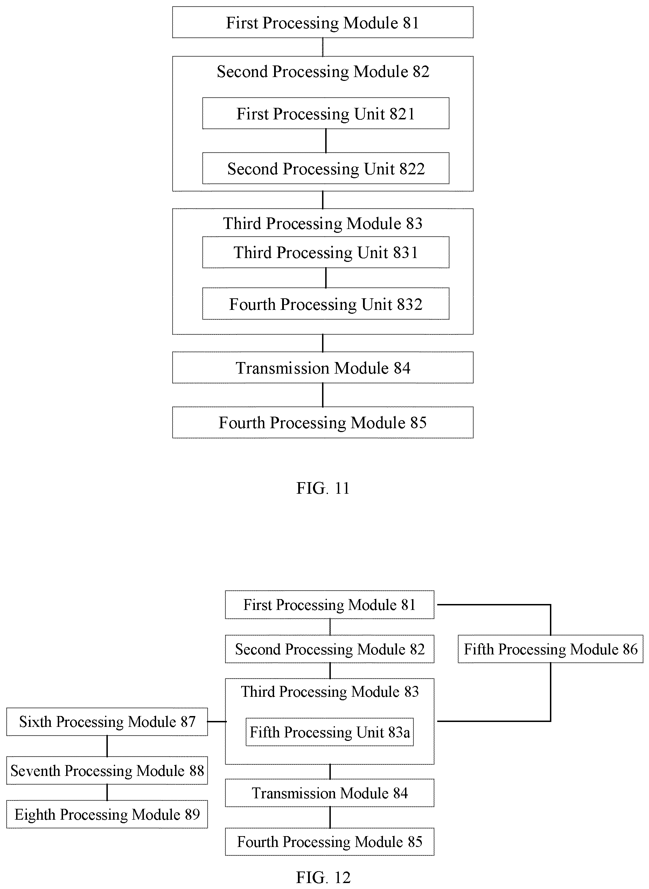

FIG. 11 is a schematic diagram of a structure of an apparatus for processing data according to another exemplary embodiment of this disclosure.

In some optional embodiments, as shown in FIG. 11, based on the embodiment shown in FIG. 10, the second processing module 82 may include: a first processing unit 821 and a second processing unit 822.

The first processing unit 821 may be configured to determine a task type of the data computing task.

The second processing unit 822 may be configured to determine the computation graph corresponding to the data computing task based on the task type of the data computing task.

In some optional embodiments, the second processing unit 822 specifically may be configured to:
in response to the task type of the data computing task being a first type, obtain an operator identifier and a parameter for computation from the data computing task, and determine, based on the operator identifier, a target operator corresponding to the data computing task; and determine the computation graph corresponding to the data computing task based on the parameter for computation and the target operator.

In some optional embodiments, the second processing unit 822 specifically may be configured to:
in response to the task type of the data computing task being a second type, obtain a parameter for computation from the data computing task; obtain, based on the parameter for computation, a model file corresponding to the data computing task; and generate, based on the model file, the computation graph corresponding to the data computing task.

In some optional embodiments, as shown in FIG. 11, based on the embodiment shown in FIG. 10, the third processing module 83 may include: a third processing unit 831 and a fourth processing unit 832.

The third processing unit 831 may be configured to determine, based on the performance parameters of the plurality of hardware devices, a candidate hardware device supporting an operation corresponding to a target operator, any one of the one or more operators being used as the target operator.

The fourth processing unit 832 may determine, based on a current resource usage status of the candidate hardware device and an estimated computation amount for the target operator, a target hardware device corresponding to the target operator from the candidate hardware device.

FIG. 12 is a schematic diagram of a structure of an apparatus for processing data according to yet another exemplary embodiment of this disclosure.

In some optional embodiments, as shown in FIG. 12, based on the embodiment shown in FIG. 10, the apparatus according to embodiments of this disclosure further may include:
a fifth processing module 86, which may be configured to determine, based on the data computing task, whether a hardware device is specified,
The third processing module 83 may include: a fifth processing unit 83a, which may be configured to: in response to the hardware device being specified, determine the one or more target hardware devices corresponding respectively to the one or more operators based on the specified hardware device, and a performance parameter and a current resource usage status of the specified hardware device.

In some optional embodiments, the fifth processing unit 83a specifically may be configured to: determine an availability state of the specified hardware device; and in response to the availability state of the specified hardware indicating "available", determine the one or more target hardware devices corresponding respectively to the one or more operators based on the performance parameter of the specified hardware device, the current resource usage status of the specified hardware device, and one or more estimated computation amounts corresponding respectively to the one or more operators.

In some optional embodiments, the third processing module 83 may include the third processing unit 831, the fourth processing unit 832, and the fifth processing unit 83a.

In some optional embodiments, as shown in FIG. 12, the apparatus according to embodiments of this disclosure further may include:
a sixth processing module 87, which may be configured to: in response to the availability state of the specified hardware indicating "unavailable", determine a simulation library corresponding to the specified hardware device, where the simulation library is a software library simulating a processing process of hardware by way of software;
a seventh processing module 88, which may be configured to execute, based on the simulation library, the one or more computational instruction sequences corresponding respectively to the one or more operators, to obtain an execution result of the simulation library; and
an eighth processing module 89, which may be configured to determine, based on the execution result of the simulation library, the processing result corresponding to the data computing task.

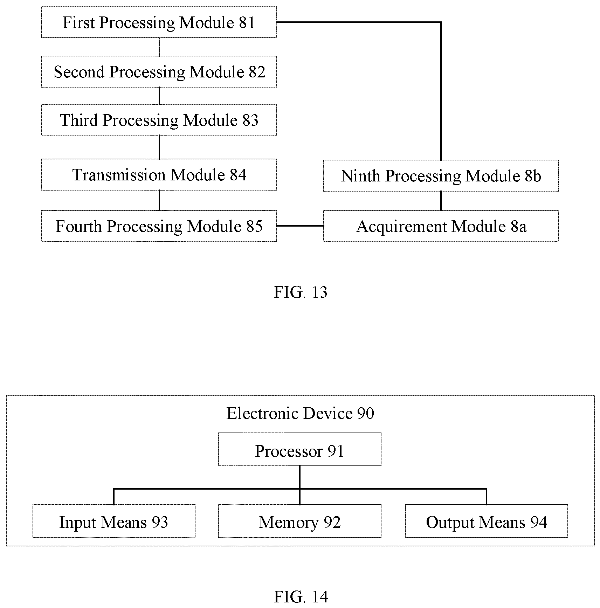

FIG. 13 is a schematic diagram of a structure of an apparatus for processing data according to yet another exemplary embodiment of this disclosure.

In some optional embodiments, as shown in FIG. 13, based on the embodiment shown in FIG. 10, the apparatus according to embodiments of this disclosure further may include:
an acquirement module 8a, which may be configured to acquire new operator information input from a user; and
a ninth processing module 8b, which may be configured to add, to an operator library, a new operator corresponding to the new operator information, and add, to an operator identifier library, an operator identifier corresponding to the new operator.

In some optional embodiments, the apparatus according to embodiments of this disclosure may include at the same time all or part of the modules and units described above.

In some optional embodiments, the apparatus according to embodiments of this disclosure is not limited by a module division manner described above. As shown in FIG. 1, the apparatus for processing data may include the application abstracting interface 121, the memory manager 122, and the scheduler 123, specifics of which are not repeated.

In some optional embodiments, the application abstracting interface 121 may include the first processing module 81. The scheduler 123 may include the second processing module 82, the third processing module 83, the transmission module 84, and the fourth processing module 85.

In some optional embodiments, the scheduler 123 further may include the fifth processing module 86, the sixth processing module 87, the seventh processing module 88, and the eighth processing module 89.

In some optional embodiments, the application abstracting interface 121 further may include the acquirement module 8a. The scheduler 123 further may include the ninth processing module 8b.

For beneficial technical effects corresponding to the exemplary embodiments of this apparatus one may refer to the respective beneficial technical effects in the "Exemplary Method" section described above, which are not repeated here.

### Exemplary Electronic Device

FIG. 14 is a schematic diagram of a structure of an electronic device according to embodiments of this disclosure, where the electronic device includes at least a processor 91 and a memory 92. The apparatus for processing data according to respective embodiments of this disclosure may be set in the electronic device.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 91 may execute one or more of the program instructions to implement the method according to the various embodiments of this disclosure that are described above and/or other desired functions.

In an example, the electronic device 90 may further include an input means 93 and an output means 94. These components are connected to each other through a bus system and/or another form of connection mechanism (not shown).

The input means 93 may further include, for example, a keyboard and a mouse.

The output means 94 may output various information to the outside, and may include, for example, a display, a loudspeaker, a printer, a communication network, and a remote output means connected to the communication network.

Certainly, for simplicity, FIG. 10 shows only some of components in the electronic device 90 that are related to this disclosure, and components such as a bus and an input/output interface are omitted. In addition, according to specific application situations, the electronic device 90 may further include any other appropriate components.

Exemplary Computer Program Product And Computer Readable Storage Medium

In addition to the foregoing method and device, embodiments of this disclosure may also relate to a computer program product, which includes computer program instructions. When the instructions are run by a processor, the processor is enabled to perform the steps, of the method according to the embodiments of this disclosure, that are described in the "Exemplary Method" section of this specification.

The computer program product may be program code, written with one or any combination of a plurality of programming languages, which is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary Method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for processing data, **characterized by** comprising:
determining (201) a data computing task to be processed;
generating (202) a computation graph corresponding to the data computing task based on the data computing task, wherein the computation graph comprises one or more operators configured to perform the data computing task;
determining (203) one or more target hardware devices corresponding respectively to the one or more operators based on performance parameters and current resource usage statuses of a plurality of hardware devices;
transmitting (204) one or more computational instruction sequences, each respectively corresponding to each of the one or more operators, to the one or more target hardware devices corresponding to respective operators, such that each of the one or more target hardware devices executes the respective computational instruction sequence; and
determining (205) a processing result corresponding to the data computing task based on one or more execution results of the one or more target hardware devices.

2. The method according to claim 1, wherein the generating (202) a computation graph corresponding to the data computing task based on the data computing task comprises:
determining (2021) a task type of the data computing task; and
determining (2022) the computation graph corresponding to the data computing task based on the task type of the data computing task.

3. The method according to claim 2, wherein the determining (2022) the computation graph corresponding to the data computing task based on the task type of the data computing task comprises:
in response to the task type of the data computing task being a first type, obtaining an operator identifier and a parameter for computation from the data computing task, and determining, based on the operator identifier, a target operator corresponding to the data computing task; and
determining the computation graph corresponding to the data computing task based on the parameter for computation and the target operator.

4. The method according to claim 2, wherein the determining (2022) the computation graph corresponding to the data computing task based on the task type of the data computing task comprises:
in response to the task type of the data computing task being a second type, obtaining a parameter for computation from the data computing task;
obtaining, based on the parameter for computation, a model file corresponding to the data computing task; and
generating, based on the model file, the computation graph corresponding to the data computing task.

5. The method according to claim 1, wherein the determining (203) one or more target hardware devices corresponding respectively to the one or more operators based on performance parameters and current resource usage statuses of a plurality of hardware devices comprises:
determining (2031), based on the performance parameters of the plurality of hardware devices, a candidate hardware device supporting an operation corresponding to a target operator, any one of the one or more operators being used as the target operator; and
determining (2032), based on a current resource usage status of the candidate hardware device and an estimated computation amount for the target operator, a target hardware device corresponding to the target operator from the candidate hardware device.

6. The method according to claim 1, further comprising: after the determining (201) a data computing task to be processed,
determining (301), based on the data computing task, whether a hardware device is specified,
wherein the determining (203) one or more target hardware devices corresponding respectively to the one or more operators based on performance parameters and current resource usage statuses of a plurality of hardware devices comprises:
in response to the hardware device being specified, determining (203a) the one or more target hardware devices corresponding respectively to the one or more operators based on the specified hardware device, and a performance parameter and a current resource usage status of the specified hardware device.

7. The method according to claim 6, wherein the determining (203a) the one or more target hardware devices corresponding respectively to the one or more operators based on the specified hardware device, and a performance parameter and a current resource usage status of the specified hardware device comprises:
determining (203a1) an availability state of the specified hardware device; and
in response to the availability state of the specified hardware indicating "available", determining (203a2) the one or more target hardware devices corresponding respectively to the one or more operators based on the performance parameter of the specified hardware device, the current resource usage status of the specified hardware device, and one or more estimated computation amounts corresponding respectively to the one or more operators.

8. The method according to claim 7, further comprising:
in response to the availability state of the specified hardware indicating "unavailable", determining (401) a simulation library corresponding to the specified hardware device, wherein the simulation library is a software library simulating a processing process of hardware by way of software;
executing (402), based on the simulation library, the one or more computational instruction sequences corresponding respectively to the one or more operators, to obtain an execution result of the simulation library; and
determining (403), based on the execution result of the simulation library, the processing result corresponding to the data computing task.

9. The method according to any one of claims 1 to 8, further comprising:
obtaining (501) new operator information input from a user; and
adding (502) a new operator corresponding to the new operator information to an operator library; and adding an operator identifier corresponding to the new operator to an operator identifier library.

10. An apparatus for processing data, **characterized by** comprising:
a first processing module (81) configured to determine a data computing task to be processed;
a second processing module (82) configured to generate a computation graph corresponding to the data computing task based on the data computing task, wherein the computation graph comprises one or more operators configured to perform the data computing task;
a third processing module (83) configured to determine one or more target hardware devices corresponding respectively to the one or more operators based on performance parameters and current resource usage statuses of a plurality of hardware devices;
a transmission module (84) configured to transmit one or more computational instruction sequences, each respectively corresponding to each of the one or more operators, to the one or more target hardware devices corresponding to respective operators, such that each of the one or more target hardware devices executes the respective computational instruction sequence; and
a fourth processing module (85) configured to determine a processing result corresponding to the data computing task based on one or more execution results of the one or more target hardware devices.

11. The apparatus according to claim 10, wherein the second processing module (82) comprises:
a first processing unit (821) configured to determine a task type of the data computing task; and
a second processing unit (822) configured to determine the computation graph corresponding to the data computing task based on the task type of the data computing task.

12. The apparatus according to claim 10, wherein the third processing module (83) comprises:
a third processing unit (831) configured to determine, based on the performance parameters of the plurality of hardware devices, a candidate hardware device supporting an operation corresponding to a target operator, any one of the one or more operators being used as the target operator; and
a fourth processing unit (832) configured to determine, based on a current resource usage status of the candidate hardware device and an estimated computation amount for the target operator, a target hardware device corresponding to the target operator from the candidate hardware device.

13. The apparatus according to claim 10, further comprising:
a fifth processing module (86) configured to determine, based on the data computing task, whether a hardware device is specified,
wherein the third processing module (83) comprises:
a fifth processing unit (83a) configured to: in response to the hardware device being specified, determining the one or more target hardware devices corresponding respectively to the one or more operators based on the specified hardware device, and a performance parameter and a current resource usage status of the specified hardware device.

14. A non-transitory computer readable storage medium, on which a computer program is stored, **characterized by** that the computer program, when executed by a processor, causes the processor to implement the method according to any one of claims 1-9.

15. An electronic device (90), **characterized by** comprising:
a processor (91); and
a memory (92), configured to store processor-executable instructions, wherein
the processor (91) is configured to read the executable instructions from the memory (92), and execute the instructions to implement the method according to any one of claims 1-9.
